# EUROPEAN PATENT APPLICATION

(11) **EP 4 406 923 A1**
(43) Date of publication of application: **31.07.2024**
(21) Application number: 22871802.9
(22) Date of filing: 06.09.2022
(51) Int. Cl.: C03C 3/093, C03C 3/118, C03C 3/097, G02B 1/00

(54) **GLASS COMPOSITION**

(30) Priority: 23.09.2021 CN 202111112733
(71) Applicant: CDGM Glass Co. Ltd., Chengdu, Sichuan 610100 (CN)
(72) Inventor: MAO, Lulu, Chengdu, Sichuan 610100 (CN); KUANG, Bo, Chengdu, Sichuan 610100 (CN); HAO, Liangzhen, Chengdu, Sichuan 610100 (CN)
(74) Representative: Bandpay & Greuter
(86) International application number: PCT/CN2022/117257
(87) International publication number: WO 2023/045753

(57) **Abstract**

The present invention provides a glass composition, wherein components thereof are represented by weight percentage, comprising: 52-72% of SiO₂; 3-17% of B₂O₃; 0.5-8% of Al₂O₃; 2-10% of ZnO; 6-25% of Rn₂O, Al₂O₃/B₂O₃ is 0.1-1.0, the Rn₂O is a total content of Li₂O, Na₂O, and K₂O. Through rational component design, the glass composition of the present invention features excellent chemical stability and weather resistance, and can be used for manufacturing lamp lens.

## Description

### Technical Field

The present invention relates to a glass composition, in particular to a glass composition with excellent chemical stability and weather resistance.

### Background

Lamp lens can shape the light emitted by light source, enhance the illumination within a range of 150 to 400 meters in front of an automobile, and improve the safety of automobile driving process. Thus, more and more lamp lenses are selected to be installed for automobile lamps. In the prior art, the lamp lens is made of soda-lime-silica glass. With significant increase in service life requirements of automobile lamp as well as the development of future lamp towards smart lamp, the soda-lime-silica glass becomes more and more unsuitable for the development needs of lamp lens. The soda-lime-silica glass can obtain imaging-grade products, but chemical stability is poor. In particular, water resistance and weather resistance are poor. Under the condition of high temperature and high humidity, the surface of the lens is easy to produce corrosive white spots in a short time, which not only reduces the illumination of automobile lamps and damages the safety, but also fails to meet the requirements of future automobile lamps for imaging.

### Summary

The technical problem to be solved by the present invention is to provide a glass composition with excellent chemical stability and weather resistance.

To solve the technical problem, the present invention provides the technical solution as below:
(1) A glass composition, wherein components thereof are represented by weight percentage, comprising: 52-72% of SiO₂; 3-17% of B₂O₃; 0.5-8% of Al₂O₃; 2-10% of ZnO; 6-25% of Rn₂O, Al₂O₃/B₂O₃ is 0.1-1.0, the Rn₂O is a total content of Li₂O, Na₂O, and K₂O.
(2) The glass composition according to (1), wherein components thereof are represented by weight percentage, further comprising: 0-15% of RO; and/or 0-5% of TiO₂; and/or 0-2% of P₂O₅; and/or 0-3% of ZrO₂; and/or 0-5% of La₂O₃; and/or 0-8% of Y₂O₃; and/or 0-1% of clarifying agent, the RO is the total content of MgO, CaO, SrO, and BaO, and the clarifying agent is one or more of Sb₂O₃, SnO₂, Na₂SiF₆, and K₂SiF₆.
(3)A glass composition, comprising SiO₂, B₂O₃, Al₂O₃, ZnO and alkali metal oxide, wherein component thereof are represented by weight percentage, Al₂O₃/B₂O₃ is 0.1-1.0, water resistance stability Dw of the glass composition is above Class 2, refractive index n_{d} is 1.50-1.56, and Abbe number v_{d} is 56-65.
(4) The glass composition according to (3), wherein components thereof are represented by weight percentage, comprising: 52-72% of SiO₂; and/or 3-17% of B₂O₃; and/or 0.5-8% of Al₂O₃; and/or 2-10% of ZnO; and/or 0-5% of TiO₂; and/or 6-25% of Rn₂O; and/or 0-15% of RO; and/or 0-2% of P₂O₅; and/or 0-3% of ZrO₂; and/or 0-5% of La₂O₃; and/or 0-8% of Y₂O₃; and/or 0-1% of clarifying agent, the RO is the total content of MgO, CaO, SrO, and BaO, Rn₂O is the total content of Li₂O, Na₂O, and K₂O, and the clarifying agent is one or more of Sb₂O₃, SnO₂, Na₂SiF₆, and K₂SiF₆.
(5) The glass composition according to any of (1)-(4), wherein components thereof are represented by weight percentage, in which: Al₂O₃/SiO₂ is 0.01-0.1, Al₂O₃/SiO₂ is preferably 0.02-0.08, and Al₂O₃/SiO₂ is more preferably 0.03-0.07; and/or Al₂O₃/B₂O₃ is 0.15-0.8, Al₂O₃/B₂O₃ is preferably 0.15-0.6; and/or ZnO/SiO₂ is 0.03-0.17, ZnO/SiO₂ is preferably 0.04-0.15, and ZnO/SiO₂ is more preferably 0.06-0.12; and/or (ZnO+TiO₂)/B₂O₃ is 0.2-2.0, (ZnO+TiO₂)/B₂O₃ is preferably 0.3-1.5, and (ZnO+TiO₂)/ B₂O₃ is more preferably 0.35-1.0.
(6) The glass composition according to any of (1)-(5), wherein components thereof are represented by weight percentage, in which: SiO₂ is 55-70%, SiO₂ is preferably 56-68%; and/or B₂O₃ is 5-15%, B₂O₃ is preferably 7-13%; and/or Al₂O₃ is 1-6%, Al₂O₃ is preferably 1-5%; and/or ZnO is 3-9%, ZnO is preferably 4-8%; and/or TiO₂ is 0.05-4%, TiO₂ is preferably 0.2-3%; and/or Rn₂O is 7-20%, Rn₂O is preferably 8-18%; and/or RO is 0-12%, RO is preferably 0-10%; and/or P₂O₅ is 0-1%; and/or ZrO₂ is 0-2%, ZrO₂ is preferably 0-1%; and/or La₂O₃ is 0-3%; and/or Y₂O₃ is 0-5%, Y₂O₃ is preferably 0-3%; and/or clarifying agent is 0-0.8%, clarifying agent is preferably 0-0.5%, the RO is the total content of MgO, CaO, SrO, and BaO, Rn₂O is the total content of Li₂O, Na₂O, and K₂O, and the clarifying agent is one or more of Sb₂O₃, SnO₂, Na₂SiF₆, and K₂SiF₆.
(7) The glass composition according to any of (1)-(6), wherein components thereof are represented by weight percentage, in which: Li₂O is 0.1-5%, Li₂O is preferably 0.2-3%, and Li₂O is more preferably 0.5-2%; and/or Na₂O is 5-15%, Na₂O is preferably 6-14%, and Na₂O is more preferably 7-13%; and/or K₂O is 0-8%, K₂O is preferably 0-7%, and K₂O is more preferably 0-5%.
(8) The glass composition according to any of (1)-(7), wherein components thereof are represented by weight percentage, in which: K₂O/(Na₂O+Li₂O) is below 0.8, K₂O/(Na₂O+Li₂O) is preferably 0.05-0.5, and K₂O/(Na₂O+Li₂O) is more preferably 0.1-0.3; and/or Li₂O/Na₂O is 0.01-0.3, Li₂O/Na₂O is preferably 0.02-0.25, and Li₂O/Na₂O is more preferably 0.03-0.22; and/or K₂O/Na₂O is 0.01-0.8, K₂O/Na₂O is preferably 0.05-0.5, and K₂O/Na₂O is more preferably 0.1-0.4.
(9) The glass composition according to any of (1)-(8), wherein components thereof are represented by weight percentage, in which: CaO is no more than 10%; and/or BaO is no more than 10%.
(10) The glass composition according to any of (1)-(9), wherein components thereof are represented by weight percentage, in which: CaO is no more than 5%; and/or BaO is no more than 5%.
(11) The glass composition according to any of (1)-(10), wherein the content of element N in glass raw material is less than 2.0%, preferably less than 1.5%, more preferably less than 1.0%, and the content of the element N is an amount of element N introduced for melting 100Kg theoretical glass/100Kg glass weight × 100%.
(12) The glass composition according to any of (1)-(11), wherein the refractive index n_{d} of the glass composition is 1.50-1.56, preferably 1.505-1.55, more preferably 1.51-1.54TSA.04222.EP1-2024.03.06-PCTEntry-Spec-Translation; the Abbe number v_{d} is 56-65, preferably 57-63, more preferably 57.5-62.
(13) The glass composition according to any of (1)-(12), wherein an acid resistance stability D_{A} of the glass composition is above Class 2, preferably Class 1; and/or a water resistance stability Dw is above Class 2, preferably Class 1; and/or a thermal expansion coefficient α_{20/300°C} is below 85×10⁻⁷/K, preferably below 82×10⁻⁷/K, more preferably below 80×10⁻⁷/K; and/or a transition temperature T_{g} is below 580°C, preferably below 570°C, more preferably below 560°C; and/or a density ρ is below 2.70g/cm³, preferably below 2.65g/cm³, more preferably below 2.60g/cm³; and/or a light transmittance τ₄₀₀ₙₘ is above 98.0%, preferably above 98.5%, more preferably above 99.0%, further preferably above 99.2%; and/or after a 200-hour weather resistance test, a turbidity increase is below 2.0%, preferably below 1.0%, more preferably below 0.8%, further preferably below 0.5%; and/or a bubble degree is above Grade A, preferably above Grade A₀, more preferably Grade A₀₀; and/or a stripe degree is above Grade C, preferably above Grade B; and/or a high-temperature viscosity at 1400°C is below 220dPaS, preferably below 180dPaS, more preferably below 150dPaS.
(14) A glass preform, made of the glass composition according to any of (1)-(13).
(15) An optical element, made of the glass composition according to any of (1)-(13) or the glass preform according to (14).
(16) An optical instrument, comprising the glass composition according to any of (1)-(13), and/or comprising the optical element according to (15).

The beneficial effects of the present invention are as follows: through rational component design, the glass composition of the present invention features excellent chemical stability and weather resistance, and can be used for manufacturing lamp lens.

### Detailed Description

The implementations of the glass composition provided by the present invention will be described in detail below, but the present invention is not limited to the following implementations. Appropriate changes may be made within the scope of the purpose of the present invention for implementation. In addition, the repeated descriptions will not limit the aim of the invention although with appropriate omissions. The glass composition provided by the present invention is sometimes referred to as glass in the following content.

### [Glass Composition]

In the following paragraphs, the range of components (ingredients) of the glass composition provided by the present invention will be described. If not specified herein, the content of each component and the total content are expressed in weight percentage (wt%), that is, the content of each component and the total content are expressed in weight percentage relative to the total glass materials converted into oxide composition. "Converted into oxide composition" therein refers to that the total weight of this oxide is taken as 100% when the oxide, compound salt and hydroxide, used as raw materials for the ingredients of the glass composition provided by the present invention, are decomposed and transformed into oxides during melting.

Unless otherwise noted in specific circumstances, the numerical range listed herein includes upper and lower limits, and the words "above" and "below" include the endpoint values as well as all integers and fractions within the range, but not limited to the specific values listed when the range is limited. "And/or" mentioned herein is inclusive. For example, "A and/or B" refers to only A, or only B, or both A and B.

### <Necessary components and optional components>

SiO₂ is a major component of the glass. If the content of SiO₂ exceeds 72%, the glass is difficult to melt, bubbles, inclusions and stripes cannot be excluded, and it is difficult to obtain imaging-grade quality products. In addition, the refractive index of the glass will be lower than the design requirements. When the refractive index of the glass is too low, it means that the lamp lens requires greater curvature under the same diffusion angle requirements of beam. Greater curvature requires higher difficulty in hot molding, optical error is greater, and defects are more likely to occur in thermoforming, thereby accelerating the generation of corrosion spots on the surface of the lens. If the content of SiO₂ is less than 52%, the chemical stability (especially water resistance) and weather resistance of the glass are difficult to meet the design requirements; on the other hand, the Abbe number of the glass is lower than the design requirements. Since general lamps belong to single-lens optical system, if the Abbe number of the glass is too low, dispersion is too large, and the beam has a serious purple edge phenomenon at the lighting edge after passing through the glass lens, which seriously affects the lighting quality. Therefore, the content of SiO₂ is 52-72%, preferably 55-70%, more preferably 56-68%.

An appropriate amount of B₂O₃ can reduce the melting temperature and high-temperature viscosity of the glass. For borosilicate glass, the lower the high-temperature viscosity, the easier it is to eliminate the bubbles, inclusions and stripes of the glass. More importantly, an appropriate amount of B₂O₃ will further tighten glass network, and increase the weather resistance of the glass. If the content of B₂O₃ is less than 3%, the above effect is not obvious. If the content of B₂O₃ is higher than 17%, the water resistance of the glass is rapidly reduced. Therefore, the content of B₂O₃ is 3-17%, preferably 5-15%, more preferably 7-13%.

An appropriate amount of Al₂O₃ can strengthen the glass network, enhance the chemical stability of the glass, and reduce the thermal expansion coefficient of the glass. If the content of Al₂O₃ is less than 0.5%, the above effect is not obvious; if the content of Al₂O₃ exceeds 8%, the high-temperature viscosity of the glass rises rapidly, which is difficult to meet the design requirements. Therefore, the content of Al₂O₃ is 0.5-8%, preferably 1-6%, more preferably 1-5%.

In some implementations, the relative content of Al₂O₃ and SiO₂ has a significant impact on the weather resistance of the glass. When the value of Al₂O₃/SiO₂ is less than 0.01, the weather resistance of the glass is reduced, which is difficult to meet the design requirements; when the value of Al₂O₃/SiO₂ is greater than 0.1, the weather resistance of the glass is no longer significantly improved, but the high-temperature viscosity rises rapidly. Therefore, the value of Al₂O₃/SiO₂ is preferably 0.01-0.1, the value of Al₂O₃/SiO₂ is more preferably 0.02-0.08, and the value of Al₂O₃/SiO₂ is further preferably 0.03-0.07.

In some implementations, the relative content of Al₂O₃ and B₂O₃ has a significant impact on the water resistance of the glass. When the value of Al₂O₃/B₂O₃ is less than 0.1, the water resistance of the glass is reduced, which is difficult to meet the design requirements; when the value of Al₂O₃/B₂O₃ is greater than 1.0, the water resistance of the glass is no longer significantly improved, but the high-temperature viscosity rises rapidly. Therefore, the value of Al₂O₃/B₂O₃ is preferably 0.1-1.0, more preferably 0.15-0.8, further preferably 0.15-0.6.

A small amount of P₂O₅ in the glass can significantly enhance the chemical strengthening performance of the glass. Meanwhile, P₂O₅ in the glass can promote the formation of glass microcrystals and enhance the thermal shock resistance of the glass. If the content of P₂O₅ is higher than 2%, the glass becomes unstable or even opaque. Therefore, the content of P₂O₅ is controlled to be below 2%, preferably below 1%, more preferably 0% if the chemical strengthening performance and thermal shock resistance of the glass are sufficient.

An appropriate amount of ZnO can significantly improve the refractive index of the glass, and reduce the thermal expansion coefficient and transition temperature of the glass. If the content of ZnO is less than 2%, the above effect is not obvious; if the content of ZnO is higher than 10%, the Abbe number of the glass is reduced, surface tension of the glass increases in the melting process, the bubble is not easy to discharge, and the bubble quality is difficult to meet the design requirements. Therefore, the content of ZnO is 2-10%, preferably 3-9%, more preferably 4-8%.

Based on a large number of experimental studies, the present inventor has found that in some implementations, ZnO in the glass will change the network structure with SiO₂ as main body, resulting in that the relative content thereof is related to the probability of micro-cracks on the glass surface. The micro-cracks of the glass will be produced in the stage of hot working or cold working, which can greatly reduce the thermal shock resistance of the glass. Meanwhile, the existence of micro-cracks will also greatly decrease the ability of the glass to withstand acid, water and climate erosion. Taking the lamp lens as an example, water vapor will begin to erode the glass at micro-crack defects, resulting in defects on the glass surface. Meanwhile, the micro-crack will expand and weather under high and low temperatures as well as water vapor corrosion, and the defects on the surface of the glass device will increase rapidly. If the ratio of the content of ZnO to the content of SiO₂, i.e., ZnO/SiO₂, is less than 0.03, the effect of inhibiting micro-cracks is not obvious; if the value of ZnO/SiO₂ is higher than 0.17, surface tension of glass liquid increases, a large number of bubbles accumulate during the feeding process, and the consistency of the refractive index and the Abbe number is reduced. In serious conditions, production will be stopped to cause a lot of losses. Therefore, the value of ZnO/SiO₂ is preferably 0.03-0.17, the value of ZnO/SiO₂ is more preferably 0.04-0.15, and the value of ZnO/SiO₂ is further preferably 0.06-0.12.

BaO, SrO, CaO, and MgO belong to alkaline-earth metal oxides. An appropriate amount of alkaline-earth metal oxide in the glass can enhance the refractive index of the glass, and enhance the stability of the glass. If the total content RO thereof exceeds 15%, the alkaline-earth metal oxide is easy to precipitate under the condition of water vapor and temperature change, thereby forming opaque salts on the glass surface and destroying the imaging effect. In addition, more than 15% of the alkaline-earth metal oxide in the glass will greatly reduce the acid resistance of the glass, resulting in rapid generation of corrosion spots on the surface of the lamp lens under the corrosion of acid rain, acid snow-melting agent, and the like. Therefore, the total content RO of BaO, SrO, CaO, and MgO is below 15%, preferably below 12%, more preferably below 10%.

Through a large number of experimental studies, the inventor has found that BaO is greater than SrO, which is greater than CaO, which is greater than MgO from the perspective of precipitation capacity. Therefore, from the perspective of precipitation control, MgO and CaO are preferred, followed by SrO and then BaO. Furthermore, a small amount of CaO and BaO, especially BaO, can significantly improve the bubble degree of the glass. Therefore, from the perspective of bubble degree improvement, the glass can contain a small amount of CaO or BaO. To sum up, if the glass design tends to further decrease the high-temperature viscosity and further increase the refractive index, it may be considered to contain no more than 10% of CaO and/or no more than 10% of BaO. If the glass design tends to control precipitate, it may be considered to contain no more than 5% of CaO and/or no more than 5% of BaO.

TiO₂ can enhance the refractive index, water resistance and weather resistance of the glass. However, if the content of TiO₂ exceeds 5%, the transmittance of the glass, especially in a near UV-purple band, decreases rapidly. On the one hand, it will decrease the illumination of the lamp lens, affecting the driving safety, and on the other hand, it will cause the temperature of the lamp lens to rise rapidly during use, accelerate the erosion of the lens surface, realize faster generation and expansion of micro-cracks, and accelerate fogging of the lens. Therefore, the content of TiO₂ is 0-5%, preferably 0.05-4%, more preferably 0.2-3%.

In some implementations, ZnO and TiO₂ in the glass will lead to the change in structure of B₂O₃, thereby causing greater change in the high-temperature viscosity, transition temperature and water resistance of the glass. When the value of (ZnO+TiO₂)/B₂O₃ is less than 0.2, the water resistance of the glass decreases rapidly, the transition temperature of the glass rises, while the decrease in the high-temperature viscosity of the glass is not obvious. When the value of (ZnO+TiO₂)/ B₂O₃ is greater than 2.0, the high-temperature viscosity of the glass rises rapidly, while the improvement in the water resistance of the glass is not obvious. In addition, UV and 400nm transmittance of the glass is greatly decreased, and the application to the lamp will lead to a sharp rise in heat, thereby aggravating the production of defects on the glass surface. Therefore, the high-temperature viscosity, transition temperature and water resistance of the glass is the most balanced when (ZnO+TiO₂)/B₂O₃ is preferably 0.2-2.0, (ZnO+TiO₂)/B₂O₃ is more preferably 0.3-1.5, and (ZnO+TiO₂)/B₂O₃ is further preferably 0.35-1.0.

Less than 3% of ZrO₂ in the glass can reduce the capacity of glass liquid to erode furnace body, and enhance the service life of melting furnace. If the content of ZrO₂ exceeds 3%, the glass is prone to non-melting materials, resulting in a reduction in inherent quality of the glass. Therefore, the content of ZrO₂ is below 3%, preferably below 2%, more preferably below 1%.

La₂O₃ can increase the refractive index of the glass and reduce the high-temperature viscosity of the glass. If the content of La₂O₃ exceeds 5%, the acid resistance of the glass decreases rapidly and the cost increases. Therefore, the content of La₂O₃ is confined to be below 5%, preferably below 3%, further preferably 0%.

Y₂O₃ in the glass can increase the refractive index and thermal shock resistance of the glass. If the content of Y₂O₃ exceeds 8%, the chemical stability of the glass decreases rapidly. Therefore, the content of Y₂O₃ is confined to be below 8%, preferably below 5%, more preferably below 3%.

Alkali metal oxides Li₂O, Na₂O, and K₂O can reduce the transition temperature of the glass and improve the melting performance of the glass. When the total content Rn₂O exceeds 25%, the chemical stability of the glass is reduced. Therefore, the content of Rn₂O is 6-25%, preferably 7-20%, more preferably 8-18%.

From the perspective of the role of single alkali metal oxide, Li₂O has the strongest capability to reduce the transition temperature and high-temperature viscosity of the glass. If the content of Li₂O is less than 0.1%, the above effect is not obvious; if the content of Li₂O exceeds 5%, the glass tends to be opaque, and the cost of raw materials rises rapidly. More seriously, the glass melts quickly, it is not easy to use efficient cold top furnace mode for production, and the production cost and energy consumption rise rapidly. Therefore, the content of Li₂O is 0.1-5%, preferably 0.2-3%, more preferably 0.5-2%.

An appropriate amount of Na₂O can improve the melting performance of the glass, and reduce the high-temperature viscosity of the glass. If the content of Na₂O is less than 5%, the melting performance and high-temperature viscosity of the glass is difficult to meet the design requirements, and the water resistance and weather resistance of the glass decrease rapidly; if the content of Na₂O is higher than 15%, the thermal expansion coefficient of the glass rises rapidly, and the water resistance and weather resistance of the glass decrease rapidly, which is difficult to meet the design requirements. Therefore, the content of Na₂O is confined to 5-15%, preferably 6-14%, more preferably 7-13%.

If the content of K₂O is higher than 8%, the network structure of the glass is seriously damaged, and the water resistance and weather resistance of the glass are difficult to meet the design requirements. Therefore, the content of K₂O is confined to be below 8%, preferably below 7%, more preferably below 5%.

Through researches, the present inventor has found that when three alkali metal oxides, i.e., Li₂O, Na₂O, and K₂O, are mixed, the structure of the glass will undergo complex changes as compared to the single presence, resulting in complex changes in the water resistance, weather resistance, thermal shock resistance and high-temperature viscosity of the glass. To be specific, when the value of K₂O/(Na₂O+Li₂O) is greater than 0.8, the chemical stability and weather resistance of the glass decrease rapidly, and the thermal expansion coefficient rises rapidly. Therefore, the value of K₂O/(Na₂O+Li₂O) is preferably below 0.8, the value of K₂O/(Na₂O+Li₂O) is more preferably 0.05-0.5, and the value of K₂O/(Na₂O+Li₂O) is further preferably 0.1-0.3.

In some implementations, when the ratio of the content of Li₂O to the content of Na₂O, i.e., Li₂O/Na₂O is less than 0.01, the high-temperature viscosity of the glass rises, and the thermal shock resistance of the glass is reduced; when the value of Li₂O/Na₂O is higher than 0.3, the time for the glass to cool from liquid state to solid state in the production process becomes longer, resulting in a decrease in the stripe degree, and meanwhile the tolerance control of blank body that needs to be molded into the lamp lens becomes very difficult, resulting in a decrease in utilization rate of the material and a reduction in the yield. Therefore, the value of Li₂O/Na₂O is preferably 0.01-0.3, more preferably 0.02-0.25, further preferably 0.03-0.22.

In some implementations, after the ratio of the content of K₂O to the content of Na₂O, i.e., K₂O/Na₂O, exceeds 0.8, the limiting capacity of the glass structure to K⁺ greatly decreases and the weather resistance of the glass decreases; if the value of K₂O/Na₂O is less than 0.01, "mixed alkali" effect of the glass becomes very weak, and K⁺ cannot effectively interfere with the precipitation of Na⁺, the weather resistance also decreases, and surface precipitation tends to be serious. Therefore, K₂O/Na₂O is preferably 0.01-0.8, more preferably 0.05-0.5, further preferably 0.1-0.4.

Sb₂O₃, SnO₂, Na₂SiF₆, K₂SiF₆, and the like can be used as the clarifying agent, which is conductive to increasing the bubble degree of the glass. It is below 1% when such clarifying agent exists alone or in combination, preferably below 0.8%, more preferably below 0.5%.

In addition to the composition design for optimizing the melting performance of the glass and enhancing the bubble degree of the glass, silicate glass with similar high viscosity usually uses an oxide component to introduce nitrate, in order to optimize the melting performance and bubble degree of the glass. During the melting process of nitrate, almost all nitrogen elements are discharged into the atmosphere as NOx gas. Nitrogen oxides have great damage to human health, and long-term inhalation may lead to a risk of lung cancer. Therefore, the present inventor is committed to studying the problem of reducing the emission of nitrogen oxide while ensuring the melting performance of the glass. Through researches, the present inventor has found that nitrate is introduced in a manner of KNO₃, Ba(NO₃)₂ and the like, and when nitrate is mixed with the above-mentioned clarifying agent, the bubble degree of the glass can meet the quality requirements, and meanwhile the emission of nitrogen oxides can be reduced to a lower level. Through conversion, the content of element N (nitrogen) in glass raw material (an amount of element N introduced for melting 100Kg theoretical glass/100Kg glass weight × 100%) is less than 2.0%, preferably less than 1.5%, more preferably less than 1.0%.

### <Unnecessary components>

In the glass of the present invention, for transition metal oxides such as V, Cr, Mn, Fe, Co, Ni, Cu, Ag and Mo, even if they are contained in small amounts in a single or compound form, the glass could be colored and absorb at a specific wavelength in the visible light region, thereby impairing the properties of the present invention in increasing visible light transmittance. Therefore, especially for glass composition with requirements on wavelength transmittance in the visible region, transition metal oxides are preferably not actually included.

Th, Cd, Tl, Os, Be and Se oxides have been used in a controlled manner as a harmful chemical substance in recent years, which is necessary not only in the glass manufacturing process, but also in the processing procedure and disposal after the productization for environmental protection measures. Therefore, in the case of attaching importance to the influence on the environment, it is preferably not actually included except for the inevitable incorporation. As a result, the glass composition does not actually contain a substance that contaminates the environment. Therefore, the glass composition of the present invention can be manufactured, processed, and discarded even if no measure is taken as a special environmental countermeasure. Meanwhile, in order to achieve environmental friendliness, As₂O₃ and PbO are preferably not contained in the glass composition of the present invention.

The terms "not contained" and "0%" as used herein mean that the compound, molecule or element and the like are not intentionally added to the glass composition of the present invention as raw materials; however, as raw materials and/or equipment for the production of glass composition, there will be some impurities or components that are not intentionally added in small or trace amounts in the final glass composition, and this situation also falls within the protection scope of the present invention patent.

In the following paragraphs, the performance of the glass composition provided by the present invention will be described:

### <Refractive index and Abbe number>

The refractive index (n_{d}) and Abbe number (v_{d}) of the glass is tested as per the method specified in *GB*/*T 7962.1-2010.*

In some implementations, the upper limit of the refractive index (n_{d}) of the glass composition provided by the present invention is 1.56, preferably 1.55, more preferably 1.54.

In some implementations, the lower limit of the refractive index (n_{d}) of the glass composition provided by the present invention is 1.50, preferably 1.505, more preferably 1.51.

In some implementations, the upper limit of the Abbe number (v_{d}) of the glass composition provided by the present invention is 65, preferably 63, more preferably 62.

In some implementations, the lower limit of the Abbe number (v_{d}) of the glass composition provided by the present invention is 56, preferably 57, more preferably 57.5.

### <Acid resistance stability>

The acid resistance stability (D_{A}) (powder method) of the glass is tested as per the method specified in GBIT 17129.

In some implementations, the acid resistance stability (D_{A}) of the glass composition provided by the present invention is above Class 2, preferably Class 1.

### <Water resistance stability>

The water resistance stability (Dw) (powder method) of the glass is tested as per the method specified in GBIT 17129.

In some implementations, the water resistance stability (Dw) of the glass composition provided by the present invention is above Class 2, preferably Class 1.

### <Thermal expansion coefficient>

The thermal expansion coefficient (α_{20/300°C}) of the glass is tested at 20-300°C as per the method specified in *GB*/*T 7962.16-2010.*

In some implementations, the thermal expansion coefficient (α_{20/300°C}) of the glass composition provided by the present invention is below 85×10⁻⁷/K, preferably below 82×10⁻⁷/K, more preferably below 80×10⁻⁷/K.

### <Density>

The density (ρ) of the glass is tested as per the method specified in *GB*/*T 7962.20-2010.*

In some implementations, the density (ρ) of the glass composition provided by the present invention is below 2.70g/cm³, preferably below 2.65g/cm³, more preferably below 2.60g/cm³.

### <Transition temperature>

The transition temperature (T_{g}) of the glass is tested as per the method specified in *GB*/*T 7962.16-2010.*

In some implementations, the transition temperature (T_{g}) of the glass composition provided by the present invention is below 580°C, preferably below 570°C, more preferably below 560°C.

### <Light transmittance>

The light transmittance (τ₄₀₀ₙₘ) of the glass is tested as per the method specified in *GB*/*T 7962.12-2010.*

In some implementations, the light transmittance (τ₄₀₀nm) of the glass composition provided by the present invention is above 98.0%, preferably above 98.5%, more preferably above 99.0%, further preferably above 99.2%.

### <Bubble degree>

The bubble degree of the glass is tested as per the method specified in *GB*/*T 7962.8-2010.*

In some implementations, the bubble degree of the glass composition provided by the present invention is above Grade A, preferably above Grade A₀, more preferably Grade A₀₀.

### <Weather resistance>

The weather resistance of the glass is tested by the methods shown below.

Place the sample in a test chamber in a saturated water vapor environment with a relative humidity of 90%, and cycle alternately at 40-50°C every 1h, and test turbidity increase thereof.

In some implementations, after a 200-hour weather resistance test, the glass composition provided by the present invention has the turbidity increase of below 2.0%, preferably below 1.0%, more preferably below 0.8%, further preferably below 0.5%.

### <Stripe degree>

The stripe degree of the glass is compared with the standard sample, by a stripe instrument composed of a point light source and a lens, from the direction where the stripe is most easily seen. The stripe degree is divided into four levels as shown in Table 1 below.

**Table 1. Rating Scale of Stripe Degree**

| Grade | Stripe degree |
|---|---|
| A | Without visible stripe under specified testing conditions |
| B | With small and scattered stripes under specified testing conditions |
| C | With slightly parallel stripes under specified testing conditions |
| D | With roughly parallel stripes under specified testing conditions |

In some implementations, the stripe degree of the glass composition provided by the present invention is above Grade C, preferably above Grade B.

### <High-temperature viscosity>

The high-temperature viscosity at 1400°C of the glass is tested according to the following method: use THETA Rheotronic II high temperature viscometer for test with rotation method, taking dPaS (Poise) as the unit of value. The smaller the value is, the smaller the viscosity is.

In some implementations, the high-temperature viscosity at 1400°C of the glass composition provided by the present invention is below 220dPaS, preferably below 180dPaS, more preferably below 150dPaS.

### [Manufacturing method]

The manufacturing method of the glass composition provided by the present invention is as follows: the glass of the present invention is made of conventional raw materials and processes, including but not limited to using oxide, hydroxide, fluoride, and various salts (carbonate, nitrate, sulfate, phosphate, and metaphosphate) as raw materials, mixing the ingredients according to the conventional method, and then feeding the mixed furnace burden into a 1400-1550°C smelting furnace (e.g., platinum, gold or platinum alloy crucible) for melting, obtaining homogeneous molten glass without bubbles and undissolved substances after clarification and homogenization, shaping the molten glass in a mould, and performing annealing. Those skilled in the art can appropriately select raw materials, process methods and process parameters according to actual needs.

### [Glass preform and optical element]

The glass preform can be made from the glass composition formed by, for example, direct drop forming, grinding or thermoforming, and other compression molding means. That is to say, the precision glass preform can be made by direct precision drop molding of molten glass composition, or glass preform can be made by grinding and other machining methods, or the glass preform can be made by making a preform for compression molding with the glass composition, re-thermoforming this preform, and then grinding the preform. It should be noted that the means for preparing glass preform is not limited to the above means.

As mentioned above, the glass composition of the present invention is useful for various optical elements and optical designs, wherein the particularly preferred method is to form a preform by the glass composition of the present invention, and use this preform for re-thermoforming, precision stamping and the like to make optical elements such as lenses and prisms.

The glass preform and the optical element of the present invention are both formed by the glass composition of the present invention described above. The glass preform of the present invention has excellent characteristics of the glass composition; the optical element of the present invention has excellent characteristics of the glass composition, and can provide such optical elements as various lenses and prisms having a high optical value.

Examples of the lens include various lenses with spherical or aspheric surfaces, such as concave meniscus lens, convex meniscus lens, biconvex lens, biconcave lens, planoconvex lens and planoconcave lens. The lens mentioned in the present invention further comprises lamp lens.

### [Optical instrument]

The optical element formed by the glass composition of the present invention can make optical instruments, and the optical glass includes but is not limited to photographic equipment, camera equipment, projector equipment, display equipment, on-board equipment (including lamp) and monitoring equipment.

### Embodiment

### <Embodiments of glass composition>

The following non-limiting embodiments are provided in order to further clearly explain and illustrate the technical solution of the present invention.

This embodiment obtains the glass composition with the composition shown in Tables 2 to 3 by the above manufacturing method of glass composition. In addition, the characteristics of each glass are measured by the test method described in the present invention, and the measurement results are shown in Tables 2 to 3.

**Table 2.**

| wt% | 1# | 2# | 3# | 4# | 5# | 6# | 7# | 8# | 9# |
|---|---|---|---|---|---|---|---|---|---|
| SiO₂ | 62.0 | 58.0 | 68.0 | 63.3 | 61.5 | 63.5 | 60.5 | 65.1 | 63.5 |
| B₂O₃ | 6.0 | 6.0 | 5.0 | 15.4 | 15.7 | 12.7 | 13.2 | 10.2 | 10.0 |
| P₂O₅ | 0.0 | 0.0 | 0.8 | 0.2 | 0.0 | 0.0 | 0.0 | 0.1 | 0.0 |
| Al₂O₃ | 3.5 | 3.5 | 3.0 | 2.3 | 1.9 | 1.3 | 2.1 | 2.8 | 5.0 |
| ZrO₂ | 0.2 | 0.1 | 0.1 | 0.1 | 0.1 | 0.2 | 0.1 | 0.1 | 0.3 |
| TiO₂ | 1.0 | 1.0 | 0.5 | 1.7 | 0.2 | 1.5 | 1.5 | 1.5 | 1.6 |
| Y₂O₃ | 0.0 | 0.0 | 0.0 | 0.0 | 0.0 | 0.0 | 0.0 | 0.0 | 0.0 |
| La₂O₃ | 0.0 | 0.0 | 0.0 | 0.0 | 0.0 | 0.0 | 0.0 | 0.0 | 0.0 |
| ZnO | 8.0 | 9.0 | 6.0 | 5.1 | 5.1 | 8.1 | 7.0 | 5.8 | 6.0 |
| BaO | 2.0 | 1.0 | 1.0 | 0.0 | 1.0 | 0.2 | 0.5 | 1.0 | 0.7 |
| CaO | 10.0 | 9.0 | 5.2 | 0.0 | 2.5 | 0.4 | 1.1 | 0.8 | 0.5 |
| SrO | 0.0 | 0.0 | 0.0 | 0.0 | 0.0 | 0.0 | 0.0 | 0.0 | 0.2 |
| MgO | 0.0 | 1.0 | 0.0 | 0.0 | 0.0 | 0.0 | 0.0 | 0.0 | 0.5 |
| Li₂O | 0.2 | 0.2 | 0.2 | 0.1 | 0.2 | 0.2 | 0.2 | 0.9 | 0.7 |
| Na₂O | 6.0 | 9.0 | 9.0 | 7.5 | 7.5 | 8.6 | 10.5 | 9.5 | 9.4 |
| K₂O | 1.0 | 2.0 | 1.0 | 4.1 | 4.1 | 3.1 | 3.1 | 1.4 | 1.1 |
| Na₂SiF₆ | 0.0 | 0.0 | 0.0 | 0.0 | 0.0 | 0.1 | 0.0 | 0.2 | 0.2 |
| K₂SiF₆ | 0.0 | 0.0 | 0.0 | 0.0 | 0.0 | 0.0 | 0.1 | 0.1 | 0.0 |
| SnO₂ | 0.0 | 0.0 | 0.0 | 0.0 | 0.0 | 0.0 | 0.0 | 0.2 | 0.2 |
| Sb₂O₃ | 0.1 | 0.2 | 0.2 | 0.2 | 0.2 | 0.1 | 0.1 | 0.3 | 0.1 |
| Total | 100.0 | 100.0 | 100.0 | 100.0 | 100.0 | 100.0 | 100.0 | 100.0 | 100.0 |
| Al₂O₃/B₂O₃ | 0.58 | 0.58 | 0.60 | 0.15 | 0.12 | 0.10 | 0.16 | 0.27 | 0.50 |
| Al₂O₃/SiO₂ | 0.06 | 0.06 | 0.04 | 0.04 | 0.03 | 0.02 | 0.03 | 0.04 | 0.08 |
| ZnO/SiO₂ | 0.13 | 0.16 | 0.09 | 0.08 | 0.08 | 0.13 | 0.12 | 0.09 | 0.09 |
| (ZnO+TiO₂)/ B₂O₃ | 1.50 | 1.67 | 1.30 | 0.44 | 0.34 | 0.76 | 0.64 | 0.72 | 0.76 |
| RO | 12.0 | 11.0 | 6.2 | 0.0 | 3.5 | 0.6 | 1.6 | 1.8 | 1.9 |
| Rn₂O | 7.2 | 11.2 | 10.2 | 11.7 | 11.8 | 11.9 | 13.8 | 11.8 | 11.2 |
| K₂O/Na₂O | 0.17 | 0.22 | 0.11 | 0.55 | 0.55 | 0.36 | 0.30 | 0.15 | 0.12 |
| Li₂O/Na₂O | 0.03 | 0.02 | 0.02 | 0.01 | 0.03 | 0.02 | 0.02 | 0.09 | 0.07 |
| K₂O/(Na₂O+Li₂O) | 0.16 | 0.22 | 0.11 | 0.54 | 0.53 | 0.35 | 0.29 | 0.14 | 0.11 |

| n_{d} | 1.5430 9 | 1.5515 6 | 1.5274 7 | 1.5168 1 | 1.5158 6 | 1.5242 3 | 1.5286 5 | 1.5272 1 | 1.5252 3 |
|---|---|---|---|---|---|---|---|---|---|
| v_{d} | 57.90 | 57.16 | 59.20 | 59.50 | 62.38 | 59.57 | 58.80 | 58.21 | 58.34 |
| τ₄₀₀ₘₙ(%) | 99.3 | 99.4 | 99.5 | 99.1 | 99.3 | 99.3 | 99.3 | 99.3 | 99.3 |
| Weather resistance (%) | 0.85 | 0.92 | 0.60 | 1.20 | 1.40 | 0.85 | 1.60 | 0.45 | 0.35 |
| D_{A} | Class 1 | Class 1 | Class 1 | Class 1 | Class 2 | Class 1 | Class 1 | Class 1 | Class 1 |
| D_{W} | Class 2 | Class 1 | Class 2 | Class 2 | Class 2 | Class 2 | Class 2 | Class 1 | Class 1 |
| T_{g}(°C) | 580 | 564 | 571 | 542 | 536 | 535 | 540 | 541 | 545 |
| α_{20/300°C}(×10⁻⁷/K) | 68.0 | 83.0 | 72.0 | 81.0 | 82.0 | 75.0 | 72.0 | 73.0 | 70.0 |
| ρ(g/cm³) | 2.65 | 2.70 | 2.57 | 2.45 | 2.47 | 2.53 | 2.56 | 2.52 | 2.54 |
| High-temperature viscosity at 1400°C (dPaS) | 118.2 | 46.1 | 213.0 | 180.0 | 145.3 | 135.7 | 88.9 | 152.0 | 198.0 |
| Bubble degree | A₀₀ | A₀₀ | A₀ | A₀ | A₀ | A₀ | A₀₀ | A₀₀ | A₀ |
| Stripe degree | A | B | C | C | C | C | B | B | C |
| Content of element N in raw material | 0.5% | 0.3% | 0.8% | 0.6% | 0.5% | 0.6% | 0.4% | 0.7% | 0.8% |

**Table 3.**

| wt% | 10# | 11# | 12# | 13# | 14# | 15# | 16# | 17# |
|---|---|---|---|---|---|---|---|---|
| SiO₂ | 65.5 | 66.3 | 60.0 | 62.4 | 62.2 | 68.0 | 61.0 | 61.0 |
| B₂O₃ | 10.4 | 9.5 | 15.2 | 10.0 | 12.3 | 9.9 | 10.4 | 10.2 |
| P₂O₅ | 0.0 | 0.0 | 0.0 | 0.0 | 0.2 | 0.0 | 0.0 | 0.3 |
| Al₂O₃ | 3.0 | 4.0 | 3.0 | 3.5 | 2.8 | 1.0 | 3.0 | 2.6 |
| ZrO₂ | 0.1 | 0.1 | 0.1 | 0.1 | 0.1 | 0.2 | 0.1 | 0.2 |
| TiO₂ | 1.7 | 1.9 | 1.7 | 1.7 | 1.5 | 2.0 | 0.1 | 0.1 |
| Y₂O₃ | 0.0 | 0.0 | 0.0 | 2.0 | 0.5 | 0.0 | 0.0 | 0.0 |
| La₂O₃ | 0.0 | 0.0 | 0.0 | 1.5 | 0.5 | 0.0 | 0.0 | 0.0 |
| ZnO | 5.6 | 6.1 | 5.6 | 5.6 | 5.6 | 5.5 | 5.6 | 6.0 |
| BaO | 1.0 | 0.0 | 1.0 | 1.0 | 0.5 | 0.5 | 1.0 | 3.0 |
| CaO | 0.0 | 0.0 | 0.7 | 0.0 | 0.4 | 0.0 | 6.3 | 4.0 |
| SrO | 0.0 | 0.0 | 0.0 | 0.0 | 0.0 | 0.0 | 0.0 | 0.0 |
| MgO | 0.0 | 0.0 | 0.0 | 0.0 | 0.1 | 0.0 | 0.0 | 0.0 |
| Li₂O | 0.8 | 0.8 | 0.8 | 0.8 | 0.6 | 0.5 | 0.8 | 0.9 |
| Na₂O | 9.7 | 10.6 | 9.7 | 9.2 | 10.2 | 11.4 | 9.7 | 9.0 |
| K₂O | 1.5 | 0.2 | 1.5 | 1.5 | 1.8 | 0.5 | 1.5 | 2.2 |
| Na₂SiF₆ | 0.2 | 0.0 | 0.0 | 0.2 | 0.2 | 0.0 | 0.0 | 0.2 |
| K₂SiF₆ | 0.0 | 0.0 | 0.2 | 0.0 | 0.0 | 0.0 | 0.0 | 0.0 |
| SnO₂ | 0.0 | 0.2 | 0.0 | 0.0 | 0.2 | 0.3 | 0.2 | 0.1 |
| Sb₂O₃ | 0.5 | 0.3 | 0.5 | 0.5 | 0.3 | 0.2 | 0.3 | 0.2 |
| Total | 100.0 | 100.0 | 100.0 | 100.0 | 100.0 | 100.0 | 100.0 | 100.0 |
| Al₂O₃/B₂O₃ | 0.29 | 0.42 | 0.20 | 0.35 | 0.23 | 0.10 | 0.29 | 0.25 |
| Al₂O₃/SiO₂ | 0.05 | 0.06 | 0.05 | 0.06 | 0.05 | 0.01 | 0.05 | 0.04 |
| ZnO/SiO₂ | 0.09 | 0.09 | 0.09 | 0.09 | 0.09 | 0.08 | 0.09 | 0.10 |
| (ZnO+TiO₂)/ B₂O₃ | 0.70 | 0.84 | 0.48 | 0.73 | 0.58 | 0.76 | 0.55 | 0.60 |
| RO | 1.0 | 0.0 | 1.7 | 1.0 | 1.0 | 0.5 | 7.3 | 7.0 |
| Rn₂O | 12.0 | 11.6 | 12.0 | 11.5 | 12.6 | 12.4 | 12.0 | 12.1 |
| K₂O/Na₂O | 0.15 | 0.02 | 0.15 | 0.16 | 0.18 | 0.04 | 0.15 | 0.24 |
| Li₂O/Na₂O | 0.08 | 0.08 | 0.08 | 0.09 | 0.06 | 0.04 | 0.08 | 0.10 |
| K₂O/(Na₂O+Li₂O) | 0.14 | 0.02 | 0.14 | 0.15 | 0.17 | 0.04 | 0.14 | 0.22 |
| n_{d} | 1.52390 | 1.52213 | 1.53832 | 1.53721 | 1.52564 | 1.52466 | 1.53559 | 1.53371 |
| v_{d} | 58.64 | 57.95 | 59.10 | 57.21 | 58.47 | 57.89 | 60.52 | 60.65 |
| τ₄₀₀ₙₘ(%) | 99.1 | 99.2 | 99.1 | 99.4 | 99.3 | 99.2 | 99.7 | 99.7 |
| Weather resistance (%) | 0.40 | 0.20 | 0.70 | 0.50 | 0.40 | 0.55 | 0.40 | 0.30 |
| D_{A} | Class 1 | Class 1 | Class 1 | Class 1 | Class 1 | Class 1 | Class 1 | Class 1 |
| D_{W} | Class 1 | Class 1 | Class 2 | Class 1 | Class 1 | Class 2 | Class 1 | Class 1 |
| T_{g}(°C) | 536 | 536 | 531 | 553 | 542 | 552 | 543 | 541 |
| α_{20/300°C}(×10⁻⁷/K) | 72.0 | 70.0 | 74.0 | 70.0 | 75.0 | 73.0 | 80.0 | 78.0 |
| ρ(g/cm³) | 2.53 | 2.51 | 2.49 | 2.59 | 2.54 | 2.53 | 2.60 | 2.62 |
| High-temperature viscosity at 1400°C (dPaS) | 167.0 | 151.1 | 102.0 | 121.0 | 135.0 | 137.8 | 73.1 | 69.7 |
| Bubble degree | A₀₀ | A₀₀ | A₀₀ | A₀₀ | A₀₀ | A₀₀ | A₀₀ | A₀₀ |
| Stripe degree | B | B | B | B | B | B | B | B |
| Content of element N in raw material | 0.7% | 0.7% | 0.4% | 0.4% | 0.4% | 0.5% | 0.3% | 0.3% |

### <Glass preform embodiment>

The glass obtained by Embodiments 1-17 of the glass composition is made into a variety of lenses and prisms and other preforms such as concave meniscus lens, convex meniscus lens, biconvex lens, biconcave lens, planoconvex lens, and planoconcave lens by means of, for example, grinding, or re-thermoforming, precision stamping and other compression molding methods.

### <Optical element embodiment>

The preforms obtained in the above-mentioned glass preform embodiment are annealed for fine-tuning while reducing the deformation inside the glass, so that the optical characteristics such as the refractive index are brought to the desired values.

Then, each of the preforms is ground and polished, and a variety of lenses and prisms such as concave meniscus lens, convex meniscus lens, biconvex lens, biconcave lens, planoconvex lens, and planoconcave lens are prepared. An antireflection film may be coated on the surface of the obtained optical element.

### <Embodiments of optical instrument>

Through optical design and the use of one or more optical elements to form optical component or optical assembly, the optical element prepared by the above-mentioned optical element embodiment can be used, for example, in imaging device, sensor, microscope, medical technology, digital projection, communication, optical communication technology/information transmission, optics/lighting in the automobile field, photolithography, excimer laser, wafer, computer chip, and integrated circuit and electronic device including such circuit and chip, or camera device and apparatus used in the field of on-board products.

## Claims

1. A glass composition, wherein components thereof are represented by weight percentage, comprising: 52-72% of SiO₂; 3-17% of B₂O₃; 0.5-8% of Al₂O₃; 2-10% of ZnO; 6-25% of Rn₂O, Al₂O₃/B₂O₃ is 0.1-1.0, the Rn₂O is a total content of Li₂O, Na₂O, and K₂O.

2. The glass composition according to claim 1, wherein components thereof are represented by weight percentage, further comprising: 0-15% of RO; and/or 0-5% of TiO₂; and/or 0-2% of P₂O₅; and/or 0-3% of ZrO₂; and/or 0-5% of La₂O₃; and/or 0-8% of Y₂O₃; and/or 0-1% of clarifying agent, the RO is the total content of MgO, CaO, SrO, and BaO, and the clarifying agent is one or more of Sb₂O₃, SnO₂, Na₂SiF₆, and K₂SiF₆.

3. A glass composition, comprising SiO₂, B₂O₃, Al₂O₃, ZnO and alkali metal oxide, wherein component thereof are represented by weight percentage, Al₂O₃/B₂O₃ is 0.1-1.0, water resistance stability Dw of the glass composition is above Class 2, refractive index n_{d} is 1.50-1.56, and Abbe number v_{d} is 56-65.

4. The glass composition according to claim 3, wherein components thereof are represented by weight percentage, comprising: 52-72% of SiO₂; and/or 3-17% of B₂O₃; and/or 0.5-8% of Al₂O₃; and/or 2-10% of ZnO; and/or 0-5% of TiO₂; and/or 6-25% of Rn₂O; and/or 0-15% of RO; and/or 0-2% of P₂O₅; and/or 0-3% of ZrO₂; and/or 0-5% of La₂O₃; and/or 0-8% of Y₂O₃; and/or 0-1% of clarifying agent, the RO is the total content of MgO, CaO, SrO, and BaO, Rn₂O is the total content of Li₂O, Na₂O, and K₂O, and the clarifying agent is one or more of Sb₂O₃, SnO₂, Na₂SiF₆, and K₂SiF₆.

5. The glass composition according to any of claims 1-4, wherein components thereof are represented by weight percentage, in which: Al₂O₃/SiO₂ is 0.01-0.1, Al₂O₃/SiO₂ is preferably 0.02-0.08, and Al₂O₃/SiO₂ is more preferably 0.03-0.07; and/or Al₂O₃/B₂O₃ is 0.15-0.8, Al₂O₃/B₂O₃ is preferably 0.15-0.6; and/or ZnO/SiO₂ is 0.03-0.17, ZnO/SiO₂ is preferably 0.04-0.15, and ZnO/SiO₂ is more preferably 0.06-0.12; and/or (ZnO+TiO₂)/B₂O₃ is 0.2-2.0, (ZnO+TiO₂)/B₂O₃ is preferably 0.3-1.5, and (ZnO+TiO₂)/B₂O₃ is more preferably 0.35-1.0.

6. The glass composition according to any of claims 1-4, wherein components thereof are represented by weight percentage, in which: SiO₂ is 55-70%, SiO₂ is preferably 56-68%; and/or B₂O₃ is 5-15%, B₂O₃ is preferably 7-13%; and/or Al₂O₃ is 1-6%, Al₂O₃ is preferably 1-5%; and/or ZnO is 3-9%, ZnO is preferably 4-8%; and/or TiO₂ is 0.05-4%, TiO₂ is preferably 0.2-3%; and/or Rn₂O is 7-20%, Rn₂O is preferably 8-18%; and/or RO is 0-12%, RO is preferably 0-10%; and/or P₂O₅ is 0-1%; and/or ZrO₂ is 0-2%, ZrO₂ is preferably 0-1%; and/or La₂O₃ is 0-3%; and/or Y₂O₃ is 0-5%, Y₂O₃ is preferably 0-3%; and/or clarifying agent is 0-0.8%, clarifying agent is preferably 0-0.5%, the RO is the total content of MgO, CaO, SrO, and BaO, Rn₂O is the total content of Li₂O, Na₂O, and K₂O, and the clarifying agent is one or more of Sb₂O₃, SnO₂, Na₂SiF₆, and K₂SiF₆.

7. The glass composition according to any of claims 1-4, wherein components thereof are represented by weight percentage, in which: Li₂O is 0.1-5%, Li₂O is preferably 0.2-3%, and Li₂O is more preferably 0.5-2%; and/or Na₂O is 5-15%, Na₂O is preferably 6-14%, and Na₂O is more preferably 7-13%; and/or K₂O is 0-8%, K₂O is preferably 0-7%, and K₂O is more preferably 0-5%.

8. The glass composition according to any of claims 1-4, wherein components thereof are represented by weight percentage, in which: K₂O/(Na₂O+Li₂O) is below 0.8, K₂O/(Na₂O+Li₂O) is preferably 0.05-0.5, and K₂O/(Na₂O+Li₂O) is more preferably 0.1-0.3; and/or Li₂O/Na₂O is 0.01-0.3, Li₂O/Na₂O is preferably 0.02-0.25, and Li₂O/Na₂O is more preferably 0.03-0.22; and/or K₂O/Na₂O is 0.01-0.8, K₂O/Na₂O is preferably 0.05-0.5, and K₂O/Na₂O is more preferably 0.1-0.4.

9. The glass composition according to any of claims 1-4, wherein components thereof are represented by weight percentage, in which: CaO is no more than 10%; and/or BaO is no more than 10%.

10. The glass composition according to any of claims 1-4, wherein components thereof are represented by weight percentage, in which: CaO is no more than 5%; and/or BaO is no more than 5%.

11. The glass composition according to any of claims 1-4, wherein the content of element N in glass raw material is less than 2.0%, preferably less than 1.5%, more preferably less than 1.0%, and the content of the element N is an amount of element N introduced for melting 100Kg theoretical glass/100Kg glass weight × 100%.

12. The glass composition according to any of claims 1-4, wherein the refractive index n_{d} of the glass composition is 1.50-1.56, preferably 1.505-1.55, more preferably 1.51-1.54; the Abbe number v_{d} is 56-65, preferably 57-63, more preferably 57.5-62.

13. The glass composition according to any of claims 1-4, wherein an acid resistance stability D_{A} of the glass composition is above Class 2, preferably Class 1; and/or a water resistance stability Dw is above Class 2, preferably Class 1; and/or a thermal expansion coefficient α_{20/300°C} is below 85×10⁻⁷/K, preferably below 82×10⁻⁷/K, more preferably below 80×10⁻⁷/K; and/or a transition temperature T_{g} is below 580°C, preferably below 570°C, more preferably below 560°C; and/or a density ρ is below 2.70g/cm³, preferably below 2.65g/cm³, more preferably below 2.60g/cm³; and/or a light transmittance τ₄₀₀ₙₘ is above 98.0%, preferably above 98.5%, more preferably above 99.0%, further preferably above 99.2%; and/or after a 200-hour weather resistance test, a turbidity increase is below 2.0%, preferably below 1.0%, more preferably below 0.8%, and further preferably below 0.5%; and/or a bubble degree is above Grade A, preferably above Grade A₀, more preferably Grade A₀₀; and/or a stripe degree is above Grade C, preferably above Grade B; and/or a high-temperature viscosity at 1400°C is below 220dPaS, preferably below 180dPaS, more preferably below 150dPaS.

14. A glass preform, made of the glass composition according to any of claims 1-13.

15. An optical element, made of the glass composition according to any of claims 1-13 or the glass preform according to claim 14.

16. An optical instrument, comprising the glass composition according to any of claims 1-13, and/or comprising the optical element according to claim 15.
